# EUROPÄISCHE PATENTANMELDUNG

(11) **EP 1 338 823 A2**
(43) Veröffentlichungstag der Anmeldung: **27.08.2003**
(21) Anmeldenummer: 03001200.9
(22) Anmeldetag: 22.01.2003
(51) Int. Cl.: F16F 9/48

(54) **Hydraulischer Schwingungsdämpfer**

(30) Priorität: 21.02.2002 DE 10207471
(71) Anmelder: ThyssenKrupp Bilstein GmbH, 58256 Ennepetal (DE)
(72) Erfinder: Götz, Ole, Dipl.-Ing., 21075 Hamburg (DE); Starr, Joerg, Dipl.-Ing., 44229 Dortmund (DE)

(57) **Zusammenfassung**

Um einen hydraulischen Schwingungsdämpfer mit einem mit Flüssigkeit gefüllten Dämpferrohr (1) und einem am Ende einer oszillierenden, in das Dämpferrohr (1) eintauchenden Kolbenstange (2) angeordneten, das Dämpferrohr (1) in zwei Arbeitsräume (13, 14) teilenden, mit Durchbrüchen und Dämpfungsventilen versehenen Arbeitskolben (3) sowie einem parallel zum Arbeitskolben (3) arbeitenden, ganz oder teilweise verschließbaren Bypasskanal für den Einsatz bei Kleinlieferwagen bzw. Kombifahrzeugen mit einfachen Mitteln derart zu gestalten, dass der Fahrkomfort in beladenem oder unbeladenem Zustand des Fahrzeuges verbessert wird, ohne dass die Fahrsicherheit gefährdet wird, durchdringt der Bypasskanal die Kolbenstange (2) und weist jeweils oberhalb und unterhalb des Arbeitskolbens (3) eine Austrittsöffnung auf und wird der Bypasskanal mittels eines am Stoßdämpferrohr (1) lagefixierten Stellelements mehr oder minder geöffnet oder geschlossen.

## Beschreibung

Die Erfindung betrifft einen hydraulischen Schwingungsdämpfer nach dem Oberbegriff des Anspruchs 1.

Bei hydraulischen Schwingungsdämpfern werden häufig hydraulisch parallel zum Arbeitskolben wirkend für verschiedenste Einsatzbedingungen ganz oder teilweise verschließbare Bypasskanäle angeordnet. Einer dieser Einsatzfälle betrifft die Verwendung für Kleinlieferwagen und Kombifahrzeuge. Hierbei soll durch den schalt- und regelbaren Bypass erreicht werden, dass zur Verbesserung des Fahrkomforts eine selbstständige Erhöhung der Fahrzeugdämpfung bei Zuladung und eine Verringerung der Fahrzeugdämpfung bei Entlastung des Fahrzeuges erreicht wird. Dieser Einsatzfall ist aus der DE 33 46 660 A1 bekannt. Nachteilig bei der hier gezeigten Lösung wird eine aufwendige Stellvorrichtung benötigt, die hier als stellbares Bodenventil ausgebildet ist.

Der Erfindung liegt die Aufgabe zugrunde, hydraulische Schwingungsdämpfer für Kleinlieferwagen bzw. Kombifahrzeuge mit einfachen Mitteln derart zu gestalten, dass der Fahrkomfort in beladenem oder unbeladenem Zustand des Fahrzeuges verbessert wird, ohne dass die Fahrsicherheit gefährdet wird.

Diese Aufgabe wird mit den Merkmalen des Anspruchs 1 gelöst. Vorteilhafte Aus- und Weiterbildungen sind in den Ansprüchen 2 bis 6 beschrieben.

Die erfindungsgemäße Lösung weist den Vorteil auf, dass die vorbeschriebenen Schwingungsdämpfer die vorgenannte Aufgabe erfüllen, ohne dass es dazu besonderer externer Sensorik-, Schalt- und Regelelemente bedarf.

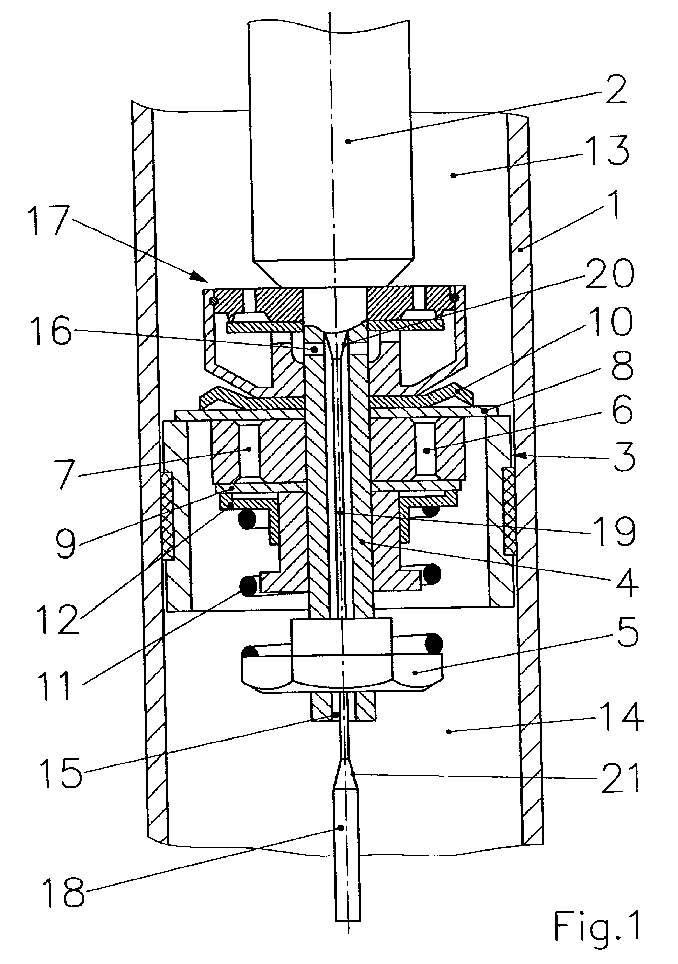

Ein Ausführungsbeispiel der Erfindung ist in der Zeichnung dargestellt und wird im Folgenden näher beschrieben. Die Figuren 1 bis 6 zeigen einen Schnitt durch den Schwingungsdämpfer im Bereich des Arbeitskolbens. Die Figuren 1 bis 6 unterscheiden sich durch die Darstellung der verschiedenen Schaltzustände.

Hydraulische Schwingungsdämpfer weisen ein Dämpferrohr auf, in dem am Ende einer oszillierend eintauchenden Kolbenstange ein Arbeitskolben angeordnet ist. Das Dämpferrohr ist in den Figuren nur abschnittsweise dargestellt. Nicht dargestellt ist das geschlossene Ende, das sich nach Darstellung in den Figuren unten befindet und das offene Ende, durch das die Kolbenstange oszillierend ein- und ausfahren kann. Das Dämpferrohr stellt bei Einrohrstoßdämpfern auch direkt das Außenrohr dar. Bei Zweirohrstoßdämpfem ist es das Innenrohr.

Die Figuren 1 bis 6 zeigen identisch einen Abschnitt des Dämpferrohrs 1 sowie der Kolbenstange 2. Der Arbeitskolben 3 ist im Schnitt dargestellt. Er ist aus mehreren Teilen zusammengesetzt und umgibt den durchmesserreduzierten Aufnahmebolzen 4 der Kolbenstange 2. Der Aufnahmebolzen 4 ist an seinem Ende mit einem Außengewinde ausgebildet, auf dem eine Befestigungsmutter 5 aufgeschraubt wird und unter eventueller Zwischenschaltung von Scheiben oder Abstandsbuchsen den Arbeitskolben 3 am Ende der Kolbenstange 2 fixiert.

Der Arbeitskolben 3 weist unterschiedliche, sich radial erstreckende Durchströmöffnungen 6, 7 auf, die sowohl in Zugrichtung der Kolbenstange als auch in Druckrichtung der Kolbenstange mittels federbelasteter Abdeckscheiben 8, 9 verschlossen sind. Im Ausführungsbeispiel ist die Feder 10 zum Andrücken der in Druckrichtung der Kolbenstange 2 abhebenden Abdeckscheibe 8 als Tellerfeder ausgebildet. Die Feder 11 zum Andrücken der Abdeckscheiben 9, die in Zugrichtung der Kolbenstange 2 öffnet, ist als Wendelfeder ausgebildet, deren Andrückkraft über eine Andrückscheibe 12 auf den äußeren Durchmesserbereich der Abdeckscheibe 9 gelenkt wird.

Der Arbeitskolben 3 trennt den mit Dämpfungsflüssigkeit gefüllten Innenraum des Dämpferrohres 1 in zwei Arbeitsräume 13, 14. Die federbelasteten Abdeckscheiben 8, 9 wirken in bei hydraulischen Schwingungsdämpfern bekannter Weise als federbelastete Rückschlagventile und ermöglichen eine vorgegebene geschwindigkeitsabhängige Dämpfung der durch die Durchströmöffnungen 6, 7 strömenden Dämpfungsflüssigkeit bei Ein- oder Ausfahren der Kolbenstange 2, wobei die Dämpfung je nach Bewegungsrichtung der Kolbenstange 2 vorzugsweise unterschiedlich ist.

Durch den Aufnahmebolzen 4 der Kolbenstange 2 verläuft ein Bypasskanal, bestehend aus einer zum unteren Arbeitsraum 14 hin offenen zentralen Bohrung 15, die an ihrem oberen Ende Durchbrüche 16 aufweist, über die die zentrale Bohrung 15 oberhalb des Arbeitskolbens 3 mit dem Arbeitsraum 13 hydraulisch verbunden ist.

In der hydraulischen Verbindung zwischen Durchbrüchen 16 und dem oberen Arbeitsraum 13 liegt ein so genanntes Komfortventil 17, auf das später eingegangen wird. Die Wirkung und Steuerung des Bypasses nach der Erfindung kann jedoch auch ohne dieses Komfortventil 17 erfolgen.

Innerhalb der zentralen Bohrung 15 ist als Stellelement eine Dosiernadel 18 angeordnet und längsbeweglich geführt. Die Dosiernadel 18 ist mit dem Dämpferrohr 1 verbunden, sodass sich der Arbeitskolben 3, ebenso wie zum Dämpferrohr 1, axial oszillierend bewegt. Die Dosiernadel 18 ist über einen vorgegebenen Bereich ausgedünnt, sodass mittig vorzugsweise ein Steg 19 verbleibt, der seitlich umströmt werden kann. Der Steg 19 geht am Ende des Bereichs über Schultern 20, 21 in den Vollquerschnitt der Dosiernadel 18 über.

Fig. 1 zeigt eine Stellung des Arbeitskolbens 3 zur Dosiernadel 18 derart, dass der Bypasskanal offen ist. Die Dämpfungsflüssigkeit kann also zusätzlich zur Durchströmöffnung des Arbeitskolbens 3, abgesehen von der Funktion des später beschriebenen Komfortventils 17, auch durch den Bypasskanal zwischen den Arbeitsräumen 13 und 14 zirkulieren.

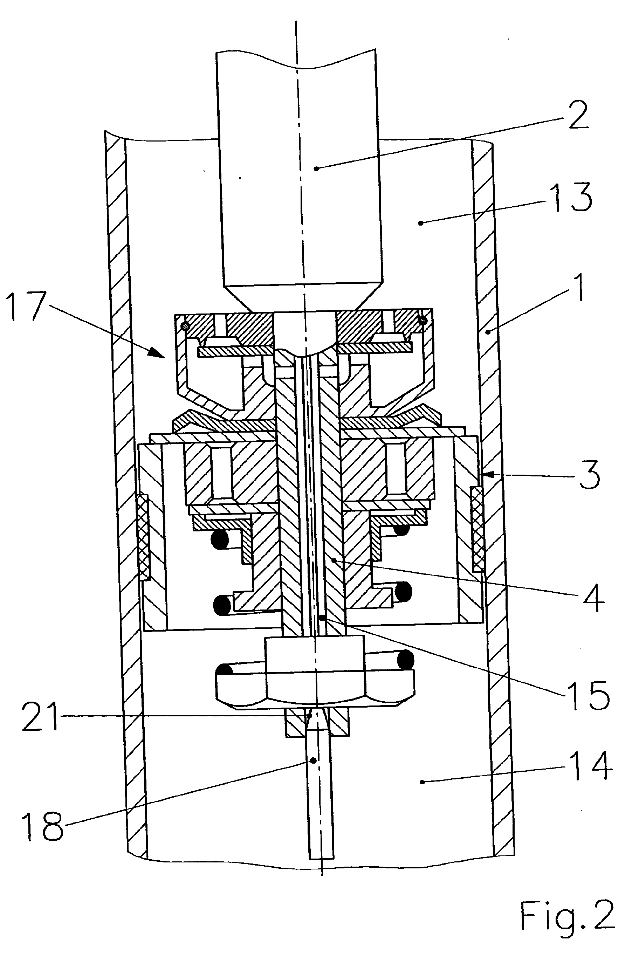

In Fig. 2 wird eine tiefer eingetauchte Stellung des Arbeitskolbens 3 gezeigt. Der Kolben ist so tief gefahren, dass die untere Schulter 21 der Dosiernadel 18 das untere, offene Ende der Bohrung 15 verschließt. In dieser Stellung des Arbeitskolbens 3 ist der Durchtritt der Dämpfungsflüssigkeit durch den Bypasskanal gesperrt.

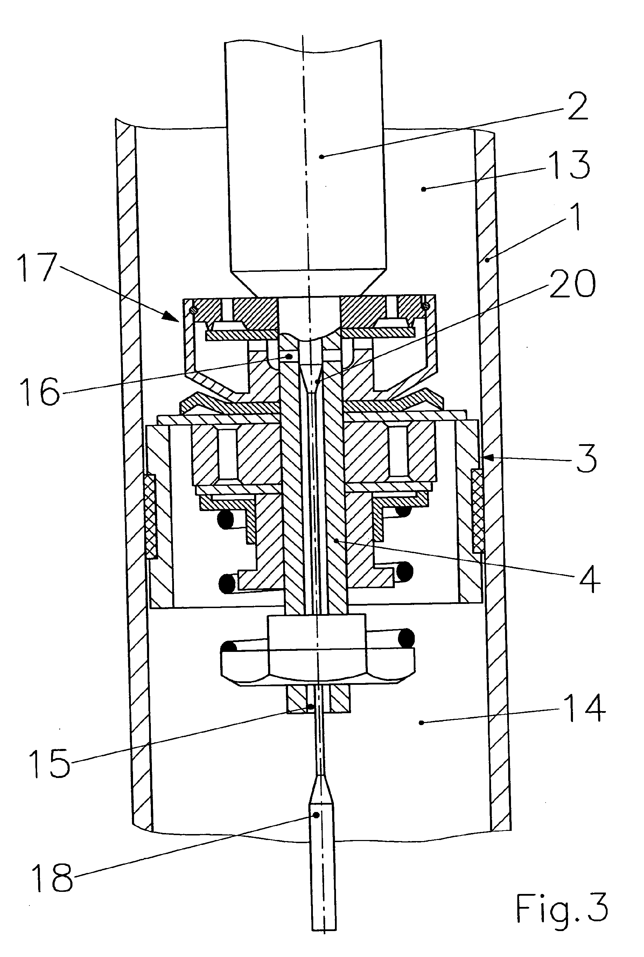

In Fig. 3 ist eine im Gegensatz zu Fig. 1 höhere Stellung des Arbeitskolbens 3 gezeigt. Bei dieser Stellung verschließt die obere Schulter 20 der Dosiernadel 18 die Durchbrüche 16 des Bypasskanals. Auch bei dieser Stellung ist der Bypasskanal gesperrt.

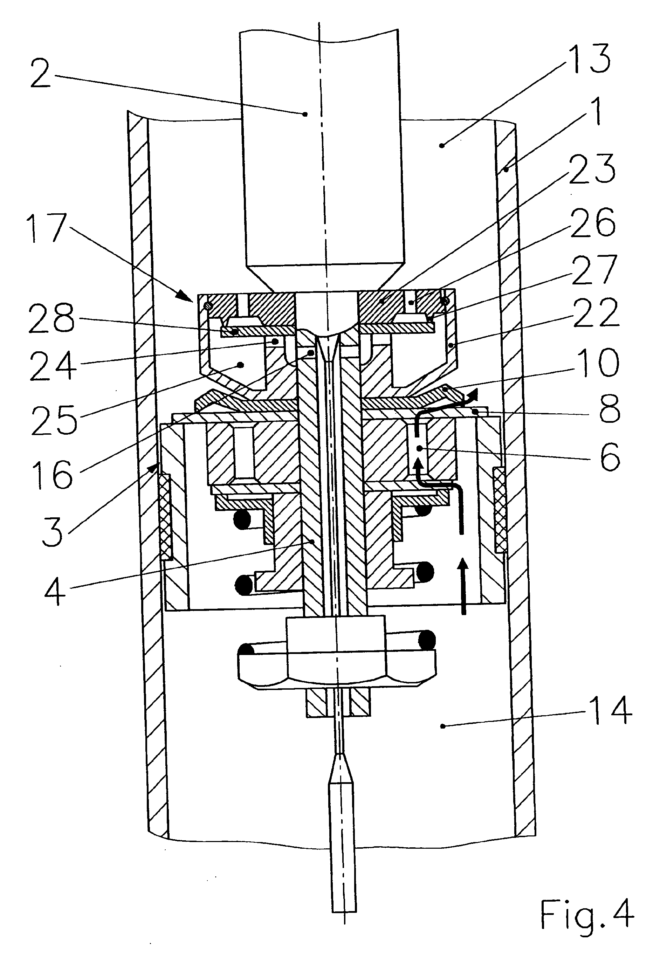

Den Fig. 4 bis 7 ist die Funktion des Komfortventils 17 zu entnehmen, das in seinem Aufbau nachfolgend beschrieben wird. Das Komfortventil 17 umgibt ebenso wie das Arbeitsventil 3 den Aufnahmebolzen 4 der Kolbenstange 2. Im Ausführungsbeispiel ist das Komfortventil 17 oberhalb des Arbeitskolbens 3, also kolbenstangenseitig vom Arbeitskolben 3 angeordnet. Das Komfortventil 17 weist einen topfförmigen Ventilkörper 22 auf, der über einen Deckel 23 verschlossen ist. Der Ventilkörper 22 weist Durchbrüche 24 auf, die eine hydraulische Verbindung zwischen dem Innenraum 25 des Komfortventils 17 und den Durchbrüchen 16 des Bypasskanals durch den Aufnahmebolzen 4 bilden. Der Deckel 23 ist mit Auslässen 26 und einem nach innen ragenden Dichtwulst 27 ausgebildet. Gegen den Dichtwulst 27 drückt unter Federvorspannung eine Federscheibe 28. Dadurch wirkt das Komfortventil 17 in Druckrichtung der Kolbenstange 2 sperrend als Rückschlagventil.

Fig. 4 zeigt den Schwingungsdämpfer bei Druckrichtung der Kolbenstange, also bei Abwärtsbewegung des Arbeitskolbens 3, wobei der Druck des unteren Arbeitsraums 14 höher ist als der Druck des oberen Arbeitsraums 13. In dieser Situation durchströmt die Dämpfungsflüssigkeit nur die entsprechende Durchströmöffnung 6 durch den Arbeitskolbeb 3.

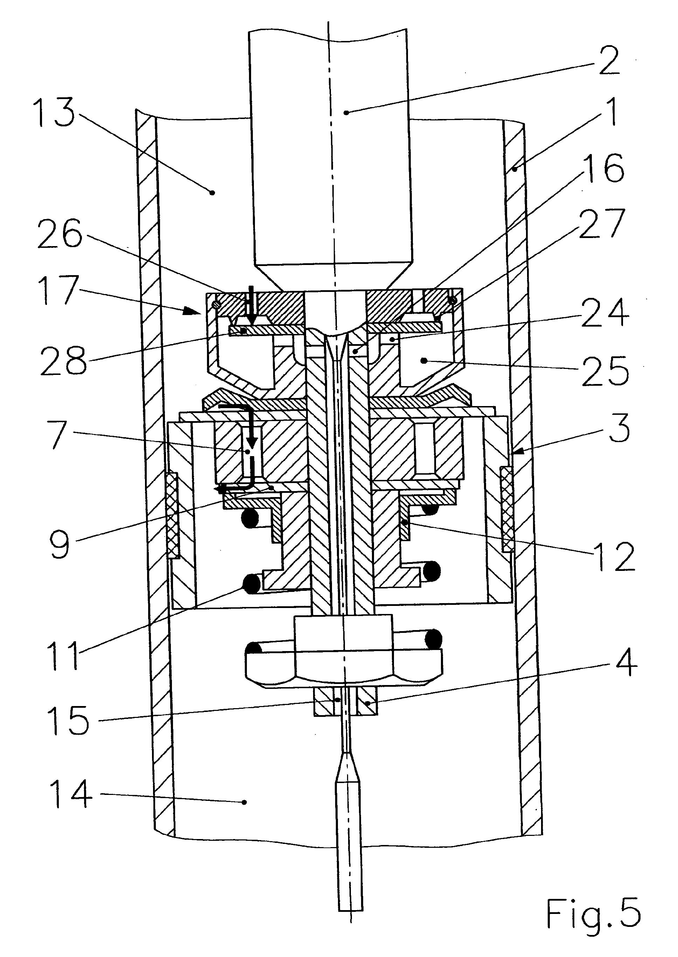

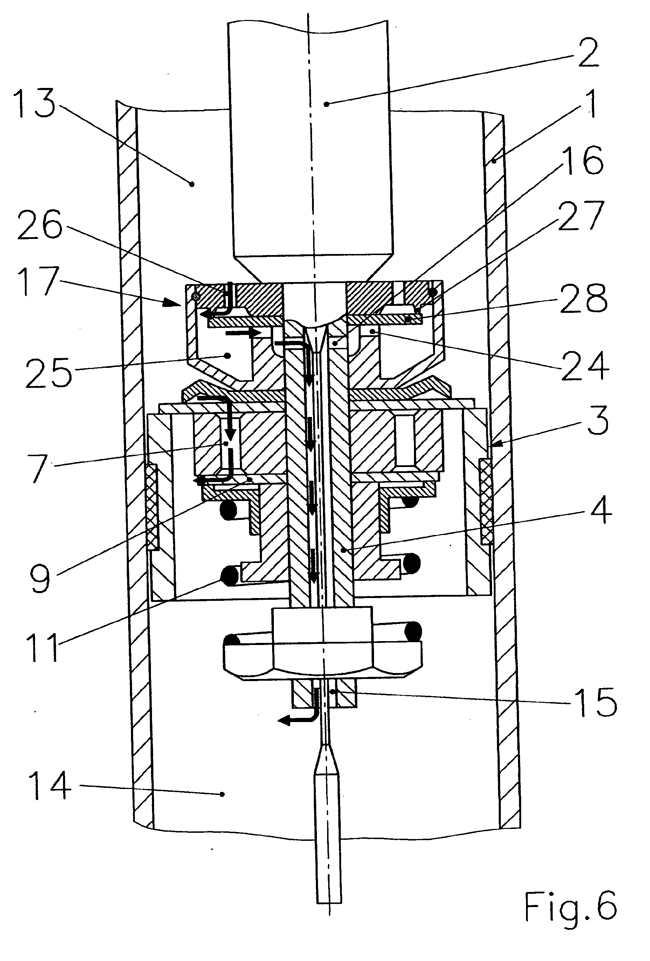

In den Fig. 5 und 6 ist die Arbeitsweise von Arbeitskolben 3 und Komfortventil 17 in Druckrichtung der Kolbenstange 2 gezeigt, bei der im unteren Arbeitsraum 14 ein höherer Druck herrscht als im oberen Arbeitsraum 13. Diese Druckdifferenz ist bei der Darstellung gemäß Fig. 5 nur gering. Hier durchströmt die Dämpfungsflüssigkeit unter Anheben der Abdeckscheibe 9 die Durchströmöffnung 7 des Arbeitskolbens 3. Eine geringe Druckdifferenz zwischen Arbeitsraum 13 und Arbeitsraum 14 bei niedriger Arbeitsstangengeschwindigkeit reicht nicht aus, um die Federvorspannung der Federscheibe 28 zu überwinden und die Federscheibe 28 vom Dichtwulst 27 abzuheben. Der Druck des unteren Arbeitsraums 14 gelangt über die Bohrung 15 und die Durchbrüche 16 und 24 in den Innenraum 25 und damit unter die Federscheibe 28.

In Fig. 6 ist der Überdruck im oberen Arbeitsraum 13 gegenüber dem unteren Arbeitsraum 14 ausreichend hoch, um die Federscheibe 28 vom Dichtwulst 27 anzuheben. Dieses erfolgt bei höherer Geschwindigkeit des Arbeitskolbens 3 nach oben. In dieser Situation wird sowohl die Durchströmöffnung 6 als auch der Bypasskanal von Dämpfungsflüssigkeit durchströmt.

### Bezugszeichenliste

- 1.: Dämpferrohr
- 2.: Kolbenstange
- 3.: Arbeitskolben
- 4.: Aufnahmebolzen
- 5.: Befestigungsmutter
- 6.: Durchströmöffnung
- 7.: Durchströmöffnung
- 8.: Abdeckscheibe
- 9.: Abdeckscheibe
- 10.: Feder
- 11.: Feder
- 12.: Andrückscheibe
- 13.: Arbeitsraum
- 14.: Arbeitsraum
- 15.: Bohrung
- 16.: Durchbruch
- 17.: Komfortventil
- 18.: Dosiernadel
- 19.: Steg
- 20.: Schulter
- 21.: Schulter
- 22.: Ventilkörper
- 23.: Deckel
- 24.: Durchbruch
- 25.: Innenraum
- 26.: Auslass
- 27.: Dichtwulst
- 28.: Federscheibe

## Patentansprüche

1. Hydraulischer Schwingungsdämpfer mit einem mit Flüssigkeit gefüllten Dämpferrohr (1) und einem am Ende einer oszillierenden, in das Dämpferrohr (1) eintauchenden Kolbenstange (2) angeordneten, das Dämpferrohr (1) in zwei Arbeitsräume (13, 14) teilenden, mit Durchbrüchen und Dämpfungsventilen versehenen Arbeitskolben (3) sowie einem parallel zum Arbeitskolben (3) arbeitenden, ganz oder teilweise verschließbaren Bypasskanal, **dadurch gekennzeichnet, dass** der Bypasskanal die Kolbenstange (2) durchdringt und jeweils oberhalb und unterhalb des Arbeitskolbens (3) eine Austrittsöffnung aufweist und dass der Bypasskanal mittels eines am Stoßdämpferrohr (1) lagefixierten Stellelements mehr oder minder geöffnet oder geschlossen wird.

2. Hydraulischer Schwingungsdämpfer nach Anspruch 1, **dadurch gekennzeichnet, dass** der Bypasskanal eine axiale zentrale Bohrung (15) durch die Kolbenstange (2) aufweist und das Stellelement als Dosiernadel (18) ausgebildet ist, die am geschlossenen Ende des Dämpferrohres (1) bzw. eines hier angeordneten Einbauelements fixiert ist.

3. Hydraulischer Schwingungsdämpfer nach Anspruch 2, **dadurch gekennzeichnet, dass** die Dosiernadel (18) im Bereich der zentralen Bohrung (15) einen reduzierten Querschnitt aufweist, der länger ist als die axiale Erstreckung des Bypasskanals.

4. Hydraulischer Schwingungsdämpfer nach einem oder mehreren der Ansprüche 1 bis 3, **dadurch gekennzeichnet, dass** wenigstens eine Öffnung des Bypasskanals durch ein federbelastetes Rückschlagventil verschlossen ist.

5. Hydraulischer Schwingungsdämpfer nach Anspruch 4, **dadurch gekennzeichnet, dass** bei der Ausbildung mit einem Rückschlagventil dieses in Zugrichtung der Kolbenstange (2) öffnet.

6. Hydraulischer Schwingungsdämpfer nach Anspruch 4 oder Anspruch 5, **dadurch gekennzeichnet, dass** die Federbelastung des Rückschlagventils so bemessen ist, dass das Rückschlagventil bei geringen Druckdifferenzen zwischen den Arbeitsräumen (13, 14) geschlossen bleibt.
